# EUROPEAN PATENT SPECIFICATION

(11) **EP 2 606 718 B1**
(45) Date of publication and mention of the grant of the patent: **22.08.2018**
(21) Application number: 12198201.1
(22) Date of filing: 19.12.2012
(51) Int. Cl.: A01J 25/12, A23C 19/068, A01J 27/00

(54) **Cheese blocks with convex sides**
Käseblöcke mit konvexen Seiten
Blocs de fromage avec bords convexes

(30) Priority: 23.12.2011 EP 11195546
(43) Date of publication of application: 26.06.2013
(73) Proprietor: FrieslandCampina Nederland B.V., 3818 LE Amersfoort (NL)
(72) Inventor: Penders, Johannes Antonius, 5324 AV Ammerzoden (NL); Raaijmakers, Theodorus Johannes Maria, 1722 ES Zuid-Scharwoude (NL)
(74) Representative: Nederlandsch Octrooibureau

(56) References cited:
- EP-A1- 0 888 710
- EP-A1- 2 387 878
- EP-A2- 1 932 431
- NL-A- 9 201 812
- US-A- 3 700 373
- US-A1- 2008 034 978

## Description

### FIELD OF THE INVENTION

The present invention relates to a method for preparing blocks of hard or semi-hard cheese having at least one convex side, to hard or semi-hard cheese blocks obtainable with this method and to cheese slices and pieces cut therefrom.

### BACKGROUND OF THE INVENTION

It is generally known that consumers of cheese particularly like flat pieces of cheese. The reason for this is that when the consumers cut the piece of cheese, with for example a cheese cutter, substantially the same slices of cheese can be obtained from the piece of cheese. Consumers highly appreciate such uniform slices of cheese. However, if a cheese seller has to cut such flat pieces of cheese from a conventional ripened round block of cheese he will have a relatively high amount of cutting losses, namely pieces from the outer side of the previously round cheese that comprise for a large part the rind of the cheese. Due to the fact that the rind of the cheese is relatively hard and dry, these pieces are generally not appreciated by consumers. Consequently, a cheese seller cannot sell these pieces of cheese for the same price as the flat pieces of cheese.

In order to solve this problem rectangularly shaped cheese blocks are brought on the market. From these rectangularly shaped blocks the cheese seller can easily cut flat pieces of cheese without any cutting losses. However, there are some important disadvantages with these rectangularly shaped blocks. First, the corners and edges of the rectangularly shaped cheese comprise significantly more salt than the rest of the cheese. After all, during brining salt can enter the cheese at these places from two or three sides, making these places in the cheese more salt and dry than for instance in the middle of the cheese. Another disadvantage is that consumers do not appreciate rectangular pieces of cheese. They feel that the cheeses have not been made by craftsmanship but in large factories. Hence, consumers favor flat pieces of cheese with a rounded side.

In the Dutch patent application NL 9201812 hard or semi-hard cheese blocks are described having a top side and a bottom side and four upright sides, wherein the two longest upright sides are made convex. A cheese seller will generally cut such a cheese block in two equal parts by cutting it in the middle in longitudinal direction. From these two parts the cheese seller can easily cut flat pieces of cheese with a rounded side. A method for preparing such cheeses is not described in this patent application.

In US3700373 a method is described for preparing cheese blocks with a rounded surface. In this method the curd block is brought in a mold comprising a rounded top side and a rounded bottom side and pressed into the shape defined by the mold. Although such a method could provide cheese blocks with at least one convex side, this method has several disadvantages. First of all, it is relatively expensive to prepare a production line for such cheeses. After all, different molds have to be bought which can only be used for these kinds of cheeses. Another disadvantage is the increased risk that the curd block will disintegrate due to the fact that the curd particles have not yet sufficiently cross-linked. Further, because of the stresses applied to the curd block or cheese block cracks may appear in the rind of the cheese, which is considered unfavorable. Lastly, the method of US3700373 will not work properly for cheeses that are relatively hard, or cheese that are in a late stage of ripening.

In the European patent application EP 1932431 a method is described for removing the plastic coating from ripened cheese by means of peeling. To this end the horizontal edges of the ripened cheese are removed from the cheese. This results in three or even six coating portions, which may be removed relatively easy. The cutting back of the edges of a curd block is not disclosed or suggested.

The American patent application US 2008/0034978 relates to the reshaping of ripened cheese. In order to achieve this, a cheese reshaper is provided that reshapes a generally rectangular portion of cheese into a generally circular or ovular portion of cheese while substantially eliminating residual edge trimmings. Again, the cutting back of the edges of a non-ripened cheese (i.e. curd block) is not disclosed or suggested.

### DETAILED DESCRIPTION OF THE INVENTION

In view of the foregoing it is an object of the present invention to provide a method for preparing blocks of hard or semi-hard cheese having at least one convex side, which method does not have the disadvantages of the methods presently used for preparing such blocks of hard or semi-hard cheese.

A first aspect of the present invention relates to a method for preparing blocks of hard or semi-hard cheese having at least one convex side, said method comprising:
i) providing curd and placing the curd in a rectangularly shaped mold;
ii) pressing the curd contained in the mold in a pressing station, such that a rectangular shaped curd block is obtained comprising a flat bottom side, a flat top side and perpendicular to these sides four upright sides, and wherein the curd block comprises the following dimensions:
   - length 20-140 cm;
   - width 20-120 cm;
   - height 5-20 cm;
iii) bringing the pressed curd block in a brining bath;
iv) removing the curd block from the brining bath; and
v) ripening the curd block over a desired period of time, such that a block of hard or semi-hard cheese is formed; and wherein at least one of the sides of the block is rendered convex by cutting back at least one of the edges of that side, said cutting back occurring before or during ripening of the curd block.

With the method of the present invention it is possible to prepare cheese blocks with convex edges, which is preferred by consumers, without having to cut the cheese after it has ripened. This way a considerable amount of waste is avoided, as the curd that has been removed from the curd block may be re-used. Furthermore, the integrity of the cheese is maintained including a nice rind. In this regard it is important to note that it was surprisingly found that although the edges of the curd block have been cut, a normal rind develops during ripening.

A further advantage of the present invention lies in the fact that due to the removal of the edges of the curd block, formation of relatively sharp edges with extremely high salt content and with an extremely dry rind after ripening are avoided. Hence, cheeses with novel properties, i.e. better rind and lower salt content, are obtained.

Methods and apparatuses for preparing cheese are generally known in the state of the art. In this regard reference is made to the standard manual "Cheese (Chemistry, Physics and Microbiology)" Third edition, volume 2, P.F. Fox P.L.H. McSweeney, T.M. Cogan, T.P Guinee, 2004 pages 21-53. In general, cheese is prepared by forming a milk gel from milk with rennet (or any other coagulant suitable for inducing coagulation in milk), cutting the milk gel into a mixture of curd and whey and at least partially draining the whey such that the curd is obtained. Hard or semi-hard cheeses generally have a moisture on a fat free basis (MFFB%) of 49-56% for hard cheese and 54-69% for semi-hard cheese (Codex Standard for Cheese, 283-1978; 7.1)

According to the present invention curd is brought into a rectangularly shaped mold and the curd in the mold is pressed in order to obtain the desired shape and water content. In accordance with the present invention the term "rectangular" includes any three dimensional shape comprising a cross-section which is substantially rectangular, particularly preferred substantially rectangular shapes according to the present invention are a cube or cuboid, such as a beam.

Due to the pressing of the curd in the mold, rectangularly shaped curd blocks, also called fresh cheese blocks are obtained. These curd blocks have a rectangular shape, more specifically they have the form of a cube or cuboid, such as a beam. In this regard it is important to note that the curd blocks are not necessarily perfect cubes or cuboids, however they will have the general form of a cube or cuboid. In this regard they have a substantially flat bottom side, a substantially flat top side and perpendicular to these sides four upright sides, such that substantially rectangular shape or even a cube or cuboid, such as a beam is formed. It is particularly preferred to shape the curd blocks such that they have the general shape of a cuboid, preferably the shape of a beam.

In accordance with the present invention the term "curd block" encompasses blocks of curd before and during ripening. The blocks obtained after ripening of the curd blocks are in accordance with the present invention referred to as "cheese blocks".

Further, the term "convex" means within the context of the present invention substantially convex. Also the term "flat" means within the context of the present invention substantially flat. The term "upright" means within the context of the present invention substantially upright.

The length of the curd blocks or cheese blocks is 20 - 140 cm, preferably 50 - 100 cm. The width of the curd blocks or cheese blocks is 20-120 cm, preferably 50-100 cm and the height of the curd blocks or cheese blocks is 5 - 20 cm, preferably at least 10 cm. It is particularly preferred to prepare curd blocks or cheese blocks having the general shape of a cuboid, such as beam, wherein the length is 45-55 cm, the width is 25 to 35 cm and the height is 10-12 cm. Most preferably the curd blocks or cheese blocks have the dimensions of a so called Eurobloc (i.e. length of about 50 cm, a width of about 30 cm and a height of about 11 cm).

After formation of the curd block it is brought in a brining bath. The general conditions for such brining baths are commonly known in the state of the art. Most often, the curd blocks are brined for 1-5 days. The salt-concentration (NaCl) is usually between 14-21 wt% and the temperature of the brine is most often 10-15°C. The curd is preferably separated from the mold before it is subjected to brining, although it may be possible to brine the curd in the mold.

The cutting back can be done before or after brining, preferably after brining, more preferably directly after brining, i.e.before step v) of the present method. During the cutting back the edge of at least one of the upright sides with one of the other sides of the curd block is removed. This cutting back can be done along the entire edge of the curd block, such that the entire edge is removed. As said, such an edge usually takes up a lot of salt during brining, making it less appreciated by consumers. By cutting back the edge this is avoided. More importantly, cutting back the edges also takes away some of the firmness of the curd block, causing the spreading out of one of the sides from which the edge was cut, such that this side becomes substantially convex. The cutting back can be done in different ways, for example by cutting the curd blocks with a knife or wire, e.g. a heated wire. It is also possible to remove the edges by means of scrapping, shaving, trimming, laser cutting or melting. In order to minimize the cutting losses a part of the side, preferably an upright side, from which the edge has been cut back is unaffected by the cutting back. Also when two or more edges are cut from a side, a part of that side, preferably an upright side, remains unaffected by the cutting back. Generally, only 10-50% of the surface area of such a side, or sides (preferably upright side(s)) is affected by the cutting back. The pieces cut from the curd block is preferably between 0,5-5 wt% of the total weight of the block.

The curd blocks are often allowed to air-dry and ripen separately on (wooden) shelves and develop a rind over time. It is also possible to allow the curd blocks to ripen in a foil. This way the formation of a rind is substantially avoid. The ripening is usually carried out by keeping the curd blocks in a ripening chamber with a controlled atmosphere. Furthermore, to allow the blocks to obtain a satisfactory shape, the ripening blocks are reqularly turned. During ripening gravity causes the curd blocks to deform further due to spreading out, or "flow", of the curd mass. Since at least one of the edges has been removed completely from the curd blocks, the spreading out will occur more and quicker than by normal (uncut) blocks. Due to this spreading out at least one convex side is formed. The curd blocks are ripened for at least 4 weeks, preferably at least 8 weeks. Preferably 4 to 100 weeks, more preferably 8 to 40 weeks, most preferably 10-25 weeks. After ripening the curd blocks have become cheese blocks.

In a preferred embodiment of the present invention two, preferably three, most preferably four parallel extending edges of the upright sides of the curd block are completely cut back. By cutting back along these edges the firmness of the block is reduced, causing it to spread out and form one or two convex upright sides. It is particularly preferred to cut back four parallel extending edges of the upright sides, this way two symmetrical convex sides are formed. It is particularly preferred to cut back the four longest edges of the curd block.This way the longest upright sides will become convex.

It is preferred to cut back from the curd block one of the edges of one of the upright sides with the bottom side or the top side such that the cross section of the block, which cross section extends perpendicular to the edge cut, comprises five sides. It is more preferred that two parallel extending edges of one or two upright sides with the top side and/or bottom side are cut back such that the cross section of the block, which cross section extends perpendicular to the edges cut, comprises six sides. It is highly preferred that the four parallel extending edges of two upright sides with the top side and the bottom side are cut back such that the cross section of the block, which cross section extends perpendicular to the edges cut, comprises eight sides. With these curd block very good spreading out is obtained, causing the upright sides from which the edges have been cut to become convex.

The edges are preferably cut at a depth of 0,5 to 10 centimeters from the edge to be cut. This depth refers to the largest direct distance between the edge cut and the plane through which the cut was made in the curd block.

Preferably, after cutting back one or more of the edges, the curd block can be coated with a plastic layer. It is also possible to coat the block with a plastic layer before cutting back, however this is not preferred. The plastic layer prevents the curd block from drying out and avoids contamination of the curd with micro-organisms or foreign objects. In a further treatment the (partially) ripened curd block can be fed to an automatic packaging apparatus.

It is also possible to subject the curd block to so called foil ripening. This way, the formation of a rind is substantially avoided. In order to achieve this the curd block is before or during ripening provided with a substantially water impermeable coating or foil.

If cuboid curd blocks are formed, wherein the longest upright sides are rendered convex by cutting back one or more of their edges as explained above, it is particularly preferred to cut the block in longitudinal direction in two parts, preferably two substantially equal parts. This is preferably done at the last stage of ripening or after ripening. This way two blocks are obtained, each comprising at least one convex side, three substantially flat upright sides and a substantially flat bottom side and top side. Such blocks are particularly suitable for cutting cheese pieces or slices. Such pieces or slices are cut in transversal direction. The cheese pieces have a thickness from 1 to 15 centimeter, preferably 5 to 10 centimeter. The cheese slices have a thickness of 0,1 to 5 centimeter, preferably 0,1 to 1 centimeter.

Although it is preferred to cut cheese slices or pieces from blocks comprising a cuboid shape, such as a beam, it is also possible to cut pieces or slices from cube shaped shapes. These cuboid or cube shaped cheese blocks may comprise one or more convex sides, preferably two convex sides.

A second aspect of the present invention relates to hard or semi-hard rectangular shaped cheese blocks obtainable by the method as described above. Such cheese blocks are not yet known in the art. After all, since the edges of the curd block or the cheese block have been cut, the quality of the cheese has improved significantly. As already described above, due to the removal of the edges of the curd block formation of relatively sharp edges with extremely high salt content and with an extremely dry rind after ripening are avoided. Furthermore, due to the convex side, preferably the upright convex side(s), it has surprisingly been found that the cheese blocks are relatively easy to cut. The cheese blocks obtainable by the above mentioned method also have excellent quality properties, such as an excellent taste and texture.

A third aspect of the present invention relates to cheese pieces or slices obtainable by the method described above.

In the following, the invention is further described with reference to the non-limiting examples and accompanying drawings:

### EXAMPLES

### Example 1

For the preparation of a semi-hard Gouda type cheese, curd was brought by means of a drain-fill machine (e.g. a Casomatic of Tetra Pak) in rectangularly shaped molds with an internal length of 50 cm and width of 30 cm. After bringing the curd in the mold a cover was placed on the mold and the curd was pressed for about 80 minutes into a beam-shaped curd block comprising a flat top side, a flat bottom side and perpendicular to these sides, four upright sides. The block of about 16 kg had a height of about 50 cm, a width of about 30 cm and a height of about 12 cm. The curd block was brined for 3 days in a brining bath comprising 18 wt% salt. After brining the four longest edges of the block were cut back by a curved knife. Subsequently, the curd block was coated with a plastic coating. After ripening for six weeks, the two longest upright sides of the cheese had become convex. This cheese was cut in longitudinal direction in two substantially equal parts, and subsequently pieces and slices we cut there from. These pieces and slices were tested by a panel, which indicated that the cheese had an excellent appearance, taste and texture.

### Example 2

For this cheese the same procedure as described in example 1 was followed. However, here the edges of the curd block were cut back with a curved knife before brining. After application of a plastic coating and ripening a cheese was obtained wherein the longest upright sides were convex and which cheese had an excellent appearance, taste and texture.

### Example 3

Again the method as described in example 1 was used. However, after the curd block was removed from the brining bath its longitudinal edges were cut back and the curd block was wrapped in a plastic foil, which foil is substantially impermeable for water. Subsequently the wrapped curd block was allowed to ripen. Due to the plastic foil the cheese did not develop a rind. After ripening for six weeks the plastic foil was removed and the cheese was tested by a panel, who came to the conclusion that the cheese obtained had an excellent appearance, taste and texture.

### FIGURES

Figure 1: shows a rectangular shaped curd block according to the invention,
Figure 2; shows the curd block similar to the block of Figure 1, wherein the four longest parallel extending edges of the block have been cut back;
Figure 3; shows a curd block according to the invention after cutting back and ripening, wherein the block has been cut longitudinally in two substantially equal cheese parts
Figure 4: shows one of the blocks of Figure 3, wherein pieces have been cut from the cheese block
Figure 5: shows also one of the blocks of Figure 3, wherein slices have been cut from the cheese block.

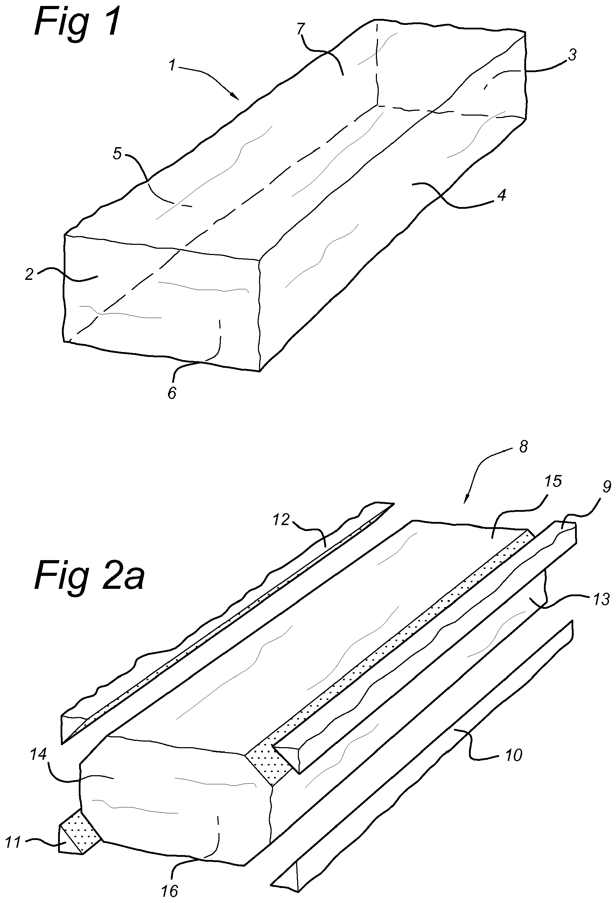

Figure 1 shows a rectangularly shaped curd block 1, having cuboid shape, namely a beam, which beam comprises two short upright sides 2, 3 and two long upright sides 4, 5. The curd block further comprises a substantially flat bottom side 6 and a substantially flat top side (7).

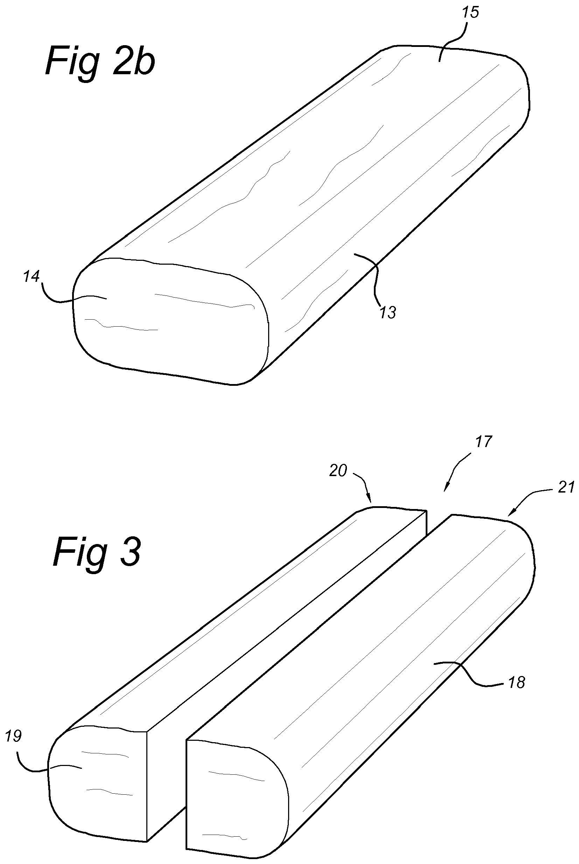

Figure 2A, shows a curd block 8 similar to the curd block of Figure 1, wherein the four edges 9, 10, 11 and 12 of the longest upright sides 13, 14 with the top side 15 and bottom side 16 have been cut back from the block 8. After cutting back the edges 9, 10, 11 and 12 the curd block is ripened for a period of at least 4 weeks. During this ripening period the longest upright sides 13 and 14 start to spread out, making these upright sides 13, 14 substantially convex as is shown in figure 2B.

Figure 3 shows a cheese block 17 according to the present invention, which cheese block 17 has been formed from a curd block from which the edges were cut and which curd block has ripened for 6 weeks on a wooden shelf. Every week during ripening the curd block was turned. Due to the fact that the longest edges of the curd block were cut back, two symmetrical longitudinal extending convex sides 18, 19 have been formed. This cheese block has been cut in two substantially equal parts 20, 21, by cutting the cheese block 17 in longitudinal direction.

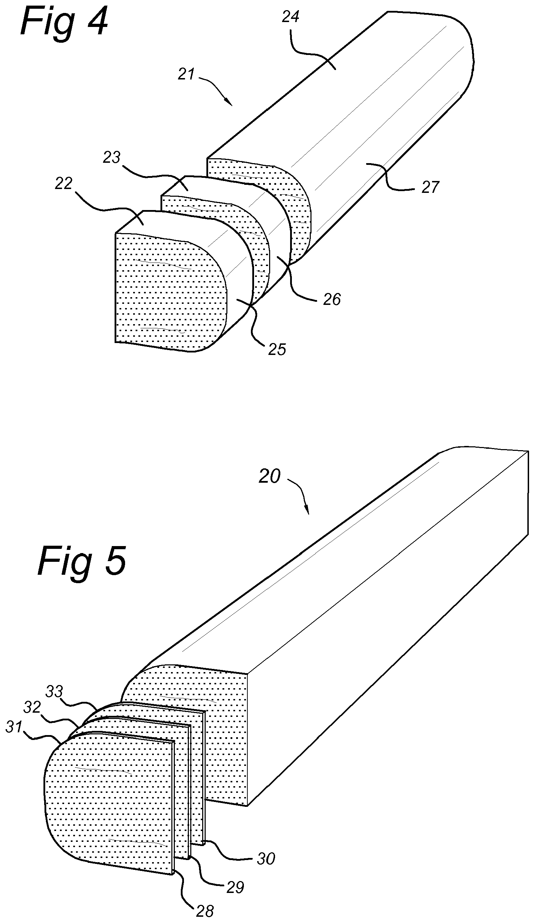

Figure 4 shows one of the parts 21 of the cheese block 17 of Figure 3. This part 21 of the cheese block 17 is cut into cheese pieces 22 and 23. The pieces 22 and 23 are subsequently packaged in packaging material. The piecces 22, 23 obtained comprise one convex side 25, 26, which is highly appreciated by consumers.

Figure 5 shows also one of the parts 20 of the cheese block 17 of Figure 3. This part 20 of the cheese block 17 is cut into thin slices 28, 29 and 30 of about 0,5 centimeter thick. These slices 28, 29 and 30 comprise one convex side 31, 32 and 33, which is highly preferred by consumers.

## Claims

1. Method for preparing blocks of hard or semi-hard cheese having at least one convex side, said method comprising:
i) providing curd and placing the curd in a rectangularly shaped mold;
ii) pressing the curd contained in the mold in a pressing station, such that a rectangular shaped curd block (1) is obtained comprising a flat bottom side (6), a flat top side (7) and perpendicular to these sides four upright sides (2, 3, 4, 5), and wherein the curd block (1) comprises the following dimensions:
- length 20-140 cm;
- width 20-120 cm;
- height 5-20 cm;
iii) bringing the pressed curd block in a brining bath;
iv) removing the curd block from the brining bath; and
v) ripening the curd block (1,8) over a desired period of time, such that a block of hard or semi-hard cheese is formed; and
wherein at least one of the sides (13, 14, 15, 16) of the block (8) is rendered convex by cutting back at least one of the edges (9, 10, 11, 12) of that side, said cutting back occurring before or during ripening.

2. Method according to claim 1, wherein the cutting back occurs between removing the curd block from the brining bath (step iv) and ripening (step v).

3. Method according to claim 1 or 2, wherein one, two, three or four of the upright sides are rendered convex by cutting back the edge of that upright side with the bottom side(16) and/or top side (15).

4. Method according to claim 3, wherein two parallel extending upright sides are rendered convex by cutting back the edges of these upright sides with the bottom side and/or top side.

5. Method according to any of the previous claims, wherein the two longest upright sides (13, 14) are rendered convex.

6. Method according to any of the previous claims, wherein the sides of the curd block (8) which are rendered convex are symmetrical.

7. Method according to any of the previous claims, wherein the edges are cut back such that a part of the side from which the edge has been cut back is unaffected by the cutting back.

8. Method according to any of the previous claims, wherein 10-50% of the surface area of the at least one side of the curd block is affected by the cutting back.

9. Method according to any of the previous claims, wherein two, preferably three and most preferably four of the parallel extending edges of the upright sides are cut back.

10. Method according to any of the previous claims, wherein one of the edges with one of the upright sides and the bottom side or the top side of the curd block (8) is cut back, such that the cross-section of the curd block comprises five sides.

11. Method according to any of the previous claims, wherein two parallel extending edges of the curd block are cut back, such that the cross section of the curd block (8) comprises six sides.

12. Method according to any of the previous claims, wherein the edges of a upright side of the curd block with the bottom side and the top side are cut back, such that the cross section of the curd block comprises six sides.

13. Method according to any of the previous claims, wherein four parallel extending edges of the upright sides of the block are cut back, such that the cross-section of the curd block comprises eight sides.

14. Method according to any of the previous claims, wherein the curd blocks are ripened over a period longer than 4 weeks, preferably longer than 8 weeks, preferably 4 to 100 weeks, more preferably 8 to 40 weeks, most preferably 10 to 25 weeks.

15. Method according to any of the previous claims, wherein the curd block during ripening or the cheese block obtained after ripening of the curd block is cut longitudinally in two parts, preferably in two equal parts.

16. Method according to any of the previous claims, wherein after the ripening the cheese block obtained according to the method according to any of the claims 1-15 are sliced to produce a plurality of cheese slices or pieces having a convex side.

17. Method according to any of the previous claims, wherein after the cutting back of at least one of the edges, the curd block is coated with a plastic layer.

18. Hard or semi-hard rectangular shaped cheese blocks prepared by a method comprising:
i) providing curd and placing the curd in a rectangularly shaped mold;
ii) pressing the curd contained in the mold in a pressing station, such that a rectangular shaped curd block is obtained comprising a flat bottom side, a flat top side and perpendicular to these sides four upright sides, and wherein the curd block comprises the following dimensions:
- length 20-140 cm;
- width 20-120 cm;
- height 5-20 cm;
iii) bringing the pressed curd block in a brining bath;
iv) removing the curd block from the brining bath; and
v) ripening the curd block over a desired period of time, such that a block of hard or semi-hard cheese is formed;
wherein at least one of the sides of the block is rendered convex by cutting back at least one of the edges of that side, said cutting back occurring before or during ripening; and wherein after the cutting back of at least one of the edges, the curd block is coated with a plastic layer.

19. Cheese slices or pieces prepared by a method comprising:
i) providing curd and placing the curd in a rectangularly shaped mold;
ii) pressing the curd contained in the mold in a pressing station, such that a rectangular shaped curd block is obtained comprising a flat bottom side, a flat top side and perpendicular to these sides four upright sides, and wherein the curd block comprises the following dimensions:
- length 20-140 cm;
- width 20-120 cm;
- height 5-20 cm;
iii) bringing the pressed curd block in a brining bath;
iv) removing the curd block from the brining bath; and
v) ripening the curd block over a desired period of time, such that a block of hard or semi-hard cheese is formed;
vi) slicing the cheese block to produce a plurality of cheese slices or pieces;
wherein at least one of the sides of the block is rendered convex by cutting back at least one of the edges of that side, said cutting back occurring before or during ripening; wherein after the cutting back of at least one of the edges, the curd block is coated with a plastic layer; and wherein the plurality of cheese slices or pieces produced by the slicing of the cheese block has a convex side.

## Patentansprüche

1. Verfahren zum Herstellen von Blöcken aus festem oder halbfestem Käse, die wenigstens eine konvexe Seite haben,
wobei das Verfahren umfasst:
a) Bereitstellen von Quark und Einfüllen des Quarks in eine rechteckige Form;
b) Pressen des in der Form enthaltenen Quarks in einer Press-Station, so dass ein rechteckig geformter Quark-Block (1) entsteht, der eine flache Unterseite (6), eine flache Oberseite (7) und senkrecht zu diesen Seiten vier aufrechtstehende Seiten (2, 3, 4, 5) umfasst, und wobei der Quark-Block (1) die folgenden Abmessungen umfasst:
Länge: 20-140 cm;
Breite: 20-120 cm;
Höhe: 5-20 cm;
c) Einbringen des gepressten Quark-Blocks in ein Salzlake-Bad;
d) Entnehmen des Quark-Blocks aus dem Salzlake-Bad; und
e) Reifen des Quark-Blocks (1, 8) über einen gewünschten Zeitraum, so dass ein Block aus festem oder halbfestem Käse entsteht; und
wobei wenigstens eine der Seiten (13, 14, 15, 16) des Blocks (8) konvex geformt wird, indem wenigstens eine der Kanten (9, 10, 11, 12) dieser Seite abgeschnitten wird, wobei das Abschneiden vor oder beim Reifen stattfindet.

2. Verfahren nach Anspruch 1, wobei das Abschneiden zwischen dem Entnehmen des Quark-Blocks aus dem Salzlake-Bad (Schritt d) und dem Reifen (Schritt e) stattfindet.

3. Verfahren nach Anspruch 1 oder 2, wobei eine, zwei, drei oder vier der aufrechtstehenden Seiten konvex geformt werden, indem die Kante dieser aufrechtstehenden Seite an der Unterseite (16) und/oder der Oberseite (15) abgeschnitten wird.

4. Verfahren nach Anspruch 3, wobei zwei parallel verlaufende aufrechtstehende Seiten konvex geformt werden, indem die Kanten dieser aufrechtstehenden Seiten an der Unterseite und/oder der Oberseite abgeschnitten werden.

5. Verfahren nach einem der vorangehenden Ansprüche, wobei die zwei längsten aufrechtstehenden Seiten (13, 14) konvex geformt werden.

6. Verfahren nach einem der vorangehenden Ansprüche, wobei die Seiten des Quark-Blocks (8), die konvex geformt werden, symmetrisch sind.

7. Verfahren nach einem der vorangehenden Ansprüche, wobei die Kanten so abgeschnitten werden, dass ein Teil der Seite, von der die Kante abgeschnitten worden ist, von dem Abschneiden nicht betroffen ist.

8. Verfahren nach einem der vorangehenden Ansprüche, wobei 10-50 % der Oberfläche der wenigstens einen Seite des Quark-Blocks von dem Abschneiden betroffen ist.

9. Verfahren nach einem der vorangehenden Ansprüche, wobei zwei, vorzugsweise drei und am besten vier der parallel verlaufenden Kanten der aufrechtstehenden Seiten abgeschnitten werden.

10. Verfahren nach einem der vorangehenden Ansprüche, wobei eine der Kanten an einer der aufrechtstehenden Seiten und der Unterseite oder der Oberseite des Quark-Blocks (8) so abgeschnitten wird, dass der Querschnitt des Quark-Blocks fünf Seiten umfasst.

11. Verfahren nach einem der vorangehenden Ansprüche, wobei zwei parallel verlaufende Kanten des Quark-Blocks so abgeschnitten werden, dass der Querschnitt des Quark-Blocks (8) sechs Seiten umfasst.

12. Verfahren nach einem der vorangehenden Ansprüche, wobei die Kanten einer aufrechtstehenden Seite des Quark-Blocks an der Unterseite und der Oberseite so abgeschnitten werden, dass der Querschnitt des Quark-Blocks sechs Seiten umfasst.

13. Verfahren nach einem der vorangehenden Ansprüche, wobei vier parallel verlaufende Kanten der aufrechtstehenden Seiten des Blocks so abgeschnitten werden, dass der Querschnitt des Quark-Blocks acht Seiten umfasst.

14. Verfahren nach einem der vorangehenden Ansprüche, wobei die Quark-Blöcke über einen Zeitraum von mehr als 4 Wochen, vorzugsweise mehr als 8 Wochen, vorzugsweise 4 bis 100 Wochen, noch besser 8 bis 40 Wochen und am besten 10 bis 25 Wochen, reifen.

15. Verfahren nach einem der vorangehenden Ansprüche, wobei der Quark-Block beim Reifen oder der nach dem Reifen des Quark-Blocks entstandene Käse-Block längs in zwei Teile, vorzugsweise in zwei gleiche Teile, geschnitten wird.

16. Verfahren nach einem der vorangehenden Ansprüche, wobei nach dem Reifen der mit dem Verfahren nach einem der Ansprüche 1-15 erzeugte Käse-Block in Scheiben geschnitten wird, um eine Vielzahl von Käsescheiben oder -stücken mit einer konvexen Seite herzustellen.

17. Verfahren nach einem der vorangehenden Ansprüche, wobei nach dem Abschneiden wenigstens einer der Kanten der Quark-Block mit einer Kunststoffschicht überzogen wird.

18. Feste oder halbfeste, rechteckig geformte Käse-Blöcke, die mit einem Verfahren hergestellt werden, das umfasst:
a) Bereitstellen von Quark und Einfüllen des Quarks in eine rechteckige Form;
b) Pressen des in der Form enthaltenen Quarks in einer Press-Station, so dass ein rechteckig geformter Quark-Block entsteht, der eine flache Unterseite, eine flache Oberseite und senkrecht zu diesen Seiten vier aufrechtstehende Seiten umfasst, und wobei der Quark-Block die folgenden Abmessungen umfasst:
Länge: 20-140 cm;
Breite: 20-120 cm;
Höhe: 5-20 cm;
c) Einbringen des gepressten Quark-Blocks in ein Salzlake-Bad;
d) Entnehmen des Quark-Blocks aus dem Salzlake-Bad; und
e) Reifen des Quark-Blocks über einen gewünschten Zeitraum, so dass ein Block aus festem oder halbfestem Käse entsteht;
wobei wenigstens eine der Seiten des Blocks konvex geformt wird, indem wenigstens eine der Kanten dieser Seite abgeschnitten wird, das Abschneiden vor oder beim Reifen stattfindet und nach dem Abschneiden wenigstens einer der Kanten der Quark-Block mit einer Kunststoffschicht überzogen wird.

19. Käsescheiben oder -stücke, die mit einem Verfahren hergestellt werden, das umfasst:
a) Bereitstellen von Quark und Einfüllen des Quarks in eine rechteckige Form;
b) Pressen des in der Form enthaltenen Quarks in einer Press-Station, so dass ein rechteckig geformter Quark-Block entsteht, der eine flache Unterseite, eine flache Oberseite und senkrecht zu diesen Seiten vier aufrechtstehende Seiten umfasst, und wobei der Quark-Block die folgenden Abmessungen umfasst:
Länge: 20-140 cm;
Breite: 20-120 cm;
Höhe: 5-20 cm;
c) Einbringen des gepressten Quark-Blocks in ein Salzlake-Bad;
d) Entnehmen des Quark-Blocks aus dem Salzlake-Bad; und
e) Reifen des Quark-Blocks über einen gewünschten Zeitraum, so dass ein Block aus festem oder halbfestem Käse ausgebildet wird;
f) Schneiden des Käse-Blocks, um eine Vielzahl von Käsescheiben oder -stücken herzustellen
wobei wenigstens eine der Seiten des Blocks konvex geformt wird, indem wenigstens eine der Kanten dieser Seite abgeschnitten wird, das Abschneiden vor oder beim Reifen stattfindet und nach dem Abschneiden wenigstens einer der Kanten der Quark-Block mit einer Kunststoffschicht überzogen wird und die mit dem Schneiden des Käse-Blocks in Scheiben hergestellte Vielzahl von Käsescheiben oder -stücken eine konvexe Seite haben.

## Revendications

1. Procédé de préparation de blocs d'un fromage à pâte dure ou mi-dure ayant au moins un côté convexe, ledit procédé comprenant les étapes suivantes :
i) fournir un caillé et placer le caillé dans un moule à forme rectangulaire ;
ii) presser le caillé contenu dans le moule dans un poste de pressage, de manière à obtenir un bloc de caillé à forme rectangulaire (1) comprenant un côté inférieur plat (6), un côté supérieur plat (7) et quatre côtés verticaux (2, 3, 4, 5) perpendiculaires à ces côtés, et dans lequel le bloc de caillé (1) comporte les dimensions suivantes :
- une longueur de 20 à 140 cm ;
- une largeur de 20 à 120 cm ;
- une hauteur de 5 à 20 cm ;
iii) déplacer le bloc de caillé pressé dans un bain de saumurage ;
iv) retirer le bloc de caillé du bain de saumurage ; et
v) affiner le bloc de caillé (1, 8) pendant une durée souhaitée, de manière à former un bloc de fromage à pâte dure ou mi-dure ; et
dans lequel au moins l'un des côtés (13, 14, 15, 16) du bloc (8) est rendu convexe par rognage d'au moins l'une des arêtes (9, 10, 11, 12) de ce côté, ledit rognage ayant lieu avant ou pendant l'affinage.

2. Procédé selon la revendication 1, dans lequel le rognage a lieu entre le retrait du bloc de caillé du bain de saumurage (étape iv) et l'affinage (étape v).

3. Procédé selon la revendication 1 ou 2, dans lequel un, deux, trois ou quatre des côtés verticaux sont rendus convexes par rognage de l'arête de ce côté vertical avec le côté inférieur (16) et/ou le côté supérieur (15).

4. Procédé selon la revendication 3, dans lequel deux côtés verticaux s'étendant parallèlement sont rendus convexes par rognage des arêtes de ces côtés verticaux avec le côté inférieur et/ou le côté supérieur.

5. Procédé selon l'une quelconque des revendications précédentes, dans lequel les deux côtés verticaux les plus longs (13, 14) sont rendus convexes.

6. Procédé selon l'une quelconque des revendications précédentes, dans lequel les côtés du bloc de caillé (8) qui sont rendus convexes sont symétriques.

7. Procédé selon l'une quelconque des revendications précédentes, dans lequel les arêtes sont rognées de manière qu'une partie du côté dont l'arête a été rognée n'est pas affectée par le rognage.

8. Procédé selon l'une quelconque des revendications précédentes, dans lequel 10 à 50 % de l'air de la surface dudit au moins un côté du bloc de caillé est affectée par le rognage.

9. Procédé selon l'une quelconque des revendications précédentes, dans lequel deux, de préférence trois et plus préférablement quatre des arêtes s'étendant parallèlement des côtés verticaux sont rognées.

10. Procédé selon l'une quelconque des revendications précédentes, dans lequel l'une des arêtes avec l'un des côtés verticaux et le côté inférieur ou le côté supérieur du bloc de caillé (8) est rognée, de sorte que la section du bloc de caillé comprend cinq côtés.

11. Procédé selon l'une quelconque des revendications précédentes, dans lequel deux arêtes s'étendant parallèlement du bloc de caillé son rognées, de sorte que la section du bloc de caillé (8) comprend six côtés.

12. Procédé selon l'une quelconque des revendications précédentes, dans lequel les arêtes d'un côté vertical du bloc de caillé avec le côté inférieur et le côté supérieur sont rognées, de sorte que la section du bloc de caillé comprend six côtés.

13. Procédé selon l'une quelconque des revendications précédentes, dans lequel quatre arêtes s'étendant parallèlement des côtés verticaux du bloc sont rognées, de sorte que la section du bloc de caillé comprend huit côtés.

14. Procédé selon l'une quelconque des revendications précédentes, dans lequel on affine les blocs de caillé pendant une période plus longue que 4 semaines, de préférence plus longue que 8 semaines, de préférence de 4 à 100 semaines, plus préférablement de 8 à 40 semaines, le plus préférablement de 10 à 25 semaines.

15. Procédé selon l'une quelconque des revendications précédentes, dans lequel on coupe longitudinalement en deux parties, de préférence en deux parties égales, le bloc de caillé pendant d'affinage ou le bloc de fromage obtenu après l'affinage du bloc de caillé.

16. Procédé selon l'une quelconque des revendications précédentes, dans lequel après l'affinage, le bloc de fromage obtenu par le procédé selon l'une quelconque des revendications 1 à 15 est découpé en tranches pour produire une pluralité de tranches ou morceaux de fromage ayant un côté convexe.

17. Procédé selon l'une quelconque des revendications précédentes, dans lequel après le rognage d'au moins une des arêtes, le bloc de caillé est revêtu d'une couche de plastique.

18. Blocs de fromage à forme rectangulaire à pâte dure ou mi-dure préparés par un procédé comprenant les étapes suivantes :
i) fournir un caillé et placer le caillé dans un moule à forme rectangulaire ;
ii) presser le caillé contenu dans le moule dans un poste de pressage, de manière à obtenir un bloc de caillé à forme rectangulaire comprenant un côté inférieur plat, un côté supérieur plat et quatre côtés verticaux perpendiculaires à ces côtés, et dans lequel le bloc de caillé comprend les dimensions suivantes :
- une longueur de 20 à 140 cm ;
- une largeur de 20 à 120 cm ;
- une hauteur de 5 à 20 cm ;
iii) déplacer le bloc de caillé pressé dans un bain de saumurage ;
iv) retirer le bloc de caillé du bain de saumurage ; et
v) affiner le bloc de caillé pendant une durée souhaitée, de manière à former un bloc de fromage à pâte dure ou mi-dure ; et
dans lequel au moins l'un des côtés du bloc est rendu convexe par rognage d'au moins l'une des arêtes de ce côté, ledit rognage ayant lieu avant ou pendant l'affinage ; et dans lequel après le rognage d'au moins une des arêtes, le bloc de caillé est revêtu d'une couche de plastique.

19. Tranches ou morceaux de fromage préparés par un procédé comprenant les étapes suivantes :
i) fournir un caillé et placer le caillé dans un moule à forme rectangulaire ;
ii) presser le caillé contenu dans le moule dans un poste de pressage, de manière à obtenir un bloc de caillé à forme rectangulaire comprenant un côté inférieur plat, un côté supérieur plat et quatre côtés verticaux perpendiculaires à ces côtés, et dans lequel le bloc de caillé comprend les dimensions suivantes :
- une longueur de 20 à 140 cm ;
- une largeur de 20 à 120 cm ;
- une hauteur de 5 à 20 cm ;
iii) déplacer le bloc de caillé pressé dans un bain de saumurage ;
iv) retirer le bloc de caillé du bain de saumurage ; et
v) affiner le bloc de caillé pendant une durée souhaitée, de manière à former un bloc de fromage à pâte dure ou mi-dure ; et
vi) découper en tranches le bloc de fromage pour produire une pluralité de tranches ou morceaux de fromage ;
dans lequel au moins l'un des côtés du bloc est rendu convexe par rognage d'au moins l'une des arêtes de ce côté, ledit rognage ayant lieu avant ou pendant l'affinage ; dans lequel après le rognage d'au moins une des arêtes, le bloc de caillé est revêtu d'une couche de plastique ; et dans lequel la pluralité de tranches ou morceaux de fromage produite par le découpage en tranches du bloc de fromage a un côté convexe.
